(19)

Europäisches
Patentamt
European
Patent Office
Office européen
des brevets

(11) **EP 3 657 250 A1**

(12) **EUROPEAN PATENT APPLICATION**

(43) Date of publication:
**27.05.2020 Bulletin 2020/22**

(21) Application number: **19206867.4**

(22) Date of filing: **04.11.2019**

(51) Int Cl.:
**G03B 21/14** *(2006.01)*   **G03B 5/00** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.11.2018   JP 2018209670**

(71) Applicant: **CANON KABUSHIKI KAISHA
Ohta-ku
Tokyo 146-8501 (JP)**

(72) Inventor: **MATSUGANO, Yuki
Tokyo, 146-8501 (JP)**

(74) Representative: **WESER & Kollegen
Patentanwälte PartmbB
Radeckestraße 43
81245 München (DE)**

(54) **IMAGE PROJECTION APPARATUS, ITS CONTROL METHOD, AND PROGRAM**

(57)     An image projection apparatus (100) to which a projection lens unit (160) that projects image light onto a projection surface is detachably attached includes a controller (150) that controls a shifter (140) so as to shift one unit of the projection lens unit and a light modulation unit (134) within a shift permissible range relative to the other unit. When the projection lens unit is attached to the image projection apparatus and the one unit is located outside the shift permissible range relative to the other unit, the controller controls the shifter so as to shift, within the shift permissible range, the one unit to a second position that can be reached by a shift amount shorter than a shift amount to a first position that is a reference position for the other unit, and to stop the one unit there.

FIG. 1

EP 3 657 250 A1

**Description**

BACKGROUND OF THE INVENTION

Field of the Invention

The present invention relates to an image projection apparatus (referred to as a projector hereinafter) that can interchange and shift and a projection lens.

Description of the Related Art

In a projector configured to shift a projection lens and to move a projection image on a screen, the projection lens may shield image light from a light modulation element, such as a liquid crystal panel, unless a shift position of the projection lens is correctly adjusted relative to the light modulation element. Thereby, the periphery of the projection image becomes dark or chipped.

Japanese Patent No. ("JP") 5911285 discloses a projector that acquires identification information of an attached projection lens, and shifts the projection lens to a reference (reset) position if the identification information is different from the pre-interchanged identification information. JP 5744566 discloses a projector that restricts an interchanged projection lens from being shifted to the outside of a shift permissible range (effective image display area) in accordance with the user operation.

The projector disclosed in JP 5911285 shifts or resets the projection lens to the reference position regardless of the shift position of the projection lens before the shift to the reference position, or the shift position that causes no problem in the image projection. It is necessary to shift the reset projection lens to a shift position desired by the user, and thus it takes a long time from the interchange of the projection lens to the start of normal image projection.

The projector disclosed in JP 5744566 cannot handle the interchange of the projection lens when the shift position of the projection lens is located outside of the shift permissible range.

SUMMARY OF THE INVENTION

The present invention provides a projector that can start a good image projection in a short time when the projection lens unit to be interchanged is located outside of the shift permissible range.

The present invention in its first aspect provides an image projection apparatus as specified in claims 1 to 13.

The present invention in its second aspect provides a control method as specified in claim 14.

The present invention in its third aspect provides a computer program as specified in claim 15.

Further features of the present invention will become apparent from the following description of exemplary embodiments with reference to the attached drawings.

BRIEF DESCRIPTION OF THE DRAWINGS

FIG. 1 is a block diagram showing a configuration of a projector according to a first embodiment of the present invention.
FIG. 2 is a flowchart illustrating processing when a projection lens is interchanged according to the first embodiment.
FIG. 3 illustrates an optical path according to the first embodiment.
FIG. 4 explains an image circle of the projection lens according to the first embodiment.
FIG. 5 illustrates a method for calculating an area of the projection lens through which image light passes according to the first embodiment.
FIG. 6 illustrates a method for determining a target lens shift position of the projection lens according to the first embodiment.
FIG. 7 explains the image light after the projection lens is shifted to the target lens shift position according to the first embodiment.
FIG. 8 is a block diagram showing a configuration of a projector according to a second embodiment of the present invention.
FIG. 9 illustrates a lens designation menu according to the second embodiment.
FIG. 10 explains a range in which a projection image can be projected with a predetermined light amount or larger according to the second embodiment.
FIG. 11 illustrates a method for determining whether or not an image light passing range sticks into an effective lens range according to a variation of the embodiment.

DESCRIPTION OF THE EMBODIMENTS

Referring now to the accompanying drawings, a description will be given of embodiments according to the present invention.

FIRST EMBODIMENT

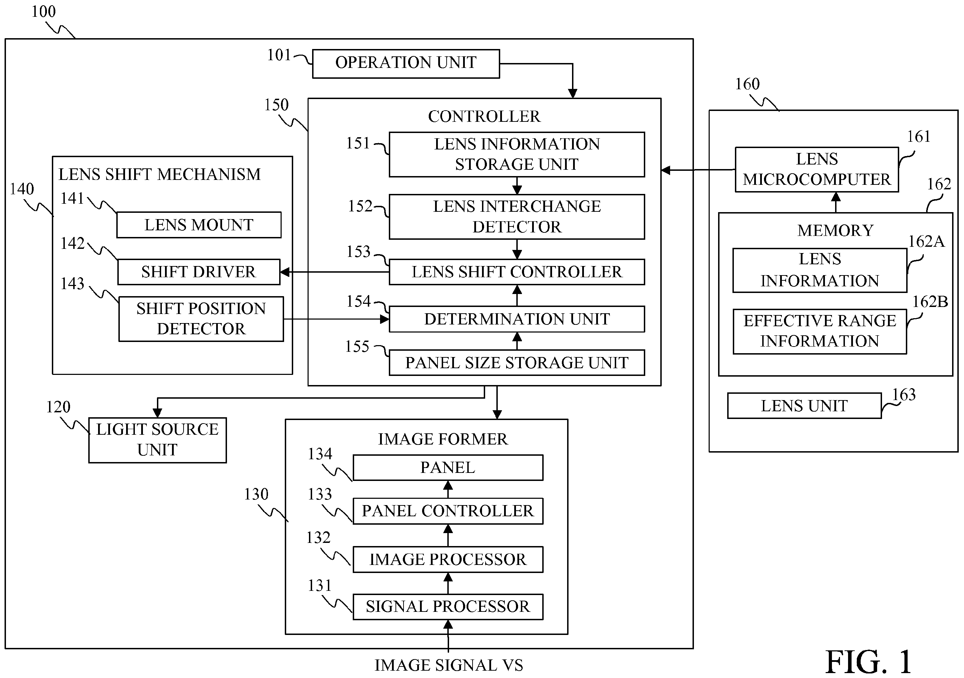

FIG. 1 illustrates a configuration of a projector 100 that serves as an image projection apparatus according to a first embodiment of the present invention. A projection lens unit (simply referred to as a projection lens hereinafter) 160 is detachably (interchangeably) attached to the projector 100.

The projector 100 includes a light source unit 120, an image former 130, a lens shift mechanism 140 as a shifter, a controller 150, and an operation unit 101. The light source unit 120 includes a light source and a light source driving circuit. The light source may use a discharge lamp such as a xenon lamp and a high-pressure mercury lamp, or a semiconductor light source such as an LED or a laser diode (LD). The light source driving circuit performs a light source turning on/off control and brightness control under control of the controller 150. The illumination light emitted from the light source unit 120 is guided to a light modulation panel 134 in the image former 130 through an unillustrated optical system.

The image former 130 includes a signal processor 131, an image processor 132, and a panel controller 133, in addition to a light modulation panel 134 serving as a light modulator. The signal processor 131 performs signal processing, such as a synchronization separation and an A/D conversion, for the input image signal VS from the outside. The image signal VS includes a variety of image (or video) signals such as an HDMI (registered trademark) signal, a DVI signal, and a VGA signal output from an image supply device such as a personal computer, a DVD player, and a television tuner. The image processor 132 performs image processing such as an interlace/progressive conversion, a frame rate conversion, an aspect ratio conversion, a color correction, and a resolution conversion for the image signal processed and output from the signal processor 131. The panel controller 133 drives the light modulation panel 134 in accordance with the image signal processed and output from the image processor 132. Thereby, the illumination light (incident light) guided to the light modulation panel 134 is modulated according to the image signal to generate image light. The light modulation panel 134 is a reflection type or transmission type liquid crystal panel, a digital micromirror device, or the like. Image light from the light modulation panel 134 is projected onto a projection surface such as an unillustrated screen via a lens unit (projection optical system) 163 in the projection lens 160. Thereby, a projection image is displayed on the projection surface.

The operation unit 101 accepts an operation of an operation member, such as a button provided on the projector 100, by a user or an operation signal from a remote controller, and outputs a control instruction to the controller 150. The controller 150 includes a microcomputer including a CPU, a ROM, a RAM, and the like. The controller 150 controls the light source unit 120, the image former 130, and the lens shift mechanism 140 using the RAM as a work memory in accordance with the control instruction or in accordance with a computer program recorded in advance in the ROM. The controller 150 communicates with a lens microcomputer 161 in the projection lens 160.

A lens shift mechanism 140 includes a lens mount 141, a shift driver 142, and a shift position detector 143. The lens mount 141 is a portion of the projector 100 to which the projection lens 160 is detachably attached, mechanically holds the attached projection lens 160, and is electrically connected to the projector 100 (controller 150). The lens shift mechanism 140 is a mechanism that shifts the lens mount 141 or the projection lens (one unit) 160 attached to it in a shift direction orthogonal to the optical axis of the lens unit 163 relative to the light modulation panel (the other unit) 134. Shifting the projection lens 160 can move the position of the projection image (projection position of the image light) on the projection surface. The shift driver 142 includes a shift actuator such as a DC motor and a stepping motor and its drive circuit, and drives the lens mount 141 in the shift direction by the drive force of the shift actuator.

The shift position detector 143 includes a variable resistor that can output an electrical signal corresponding to a shift amount between the center position of the light modulation panel 134 and the optical axis position of the projection lens 160 (lens unit 163). The shift position detector 143 sets to reference positions (first positions) the positions of the lens mount 141 and the projection lens 160 where the shift amount is 0 in the shift direction of the optical axis position of the projection lens 160 relative to the center position of the light modulation panel 134. Then, shift amounts for each shift direction (horizontal direction and vertical direction) of the lens mount 141 and the projection lens 160 from the reference positions are detected as shift positions for each shift direction (referred to as a lens shift position hereinafter).

When the controller 150 controls the shift actuator via the shift driver 142 in shifting the projection lens 160 to the target lens shift position so that a difference between the lens shift position detected by the shift position detector 143 and the target lens shift position becomes small (to zero).

The shift position detector 143 may detect the lens shift position from a driving amount of the shift actuator of the shift driver 142 (such as the number of driving pulses applied to the stepping motor), or may detect the lens shift position using a position sensor other than a variable resistor such as an encoder.

While this embodiment has shifted the entire projection lens 160 (lens unit 163) to move the position of the projection image, but may move the position of the projection image on the projection surface by shifting part of the lenses included in the lens unit 163. The position of the projection image may be moved by shifting the light modulation panel (one unit) 134 relative to the projection lens (the other unit) 160. In other words, (at least part of) the projection lens 160 and the light modulation panel 134 may be shifted relative to each other.

The controller 150 includes a lens information storage unit 151, a lens interchange detector 152, a lens shift controller 153, a determination unit 154, and a panel size storage unit 155. The projection lens 160 includes a lens memory 162 as a storage unit in addition to the lens unit 163 and the lens microcomputer 161 described above.

The lens information storage unit 151 includes a nonvolatile memory such as an EEPROM, and stores lens information (162A) of the projection lens 160 attached to the projector 100. When the projection lens 160 is attached on the projector 100, the lens interchange detector 152 acquires lens information 162A of the projection lens 160 stored in the lens memory 162 through a communication with the lens microcomputer 161, and stores it in the lens information storage unit 151.

The lens information 162A is information for identifying the projection lens 160, and includes a model, a name, a model number, a serial number, and the like of the projection lens 160. The lens information 162A may include optical information such as a focal length and an F-number of the lens unit 163 and effective range information described later. Alternatively, the projection lens 160 may be identified by providing a plurality of electrical contacts on each of the lens mount 141 and the projection lens 160, and by determining whether each of the plurality of electrical contacts on the lens mount 141 is in an electrically open state or a short state. The lens memory 162 may include a noncontact IC tag such as an RFID (Radio Frequency IDentifier) and store the lens information, and the projector 100 may acquire the lens information by wirelessly communicating with the noncontact IC tag.

When the current projection lens 160 is detached and a new projection lens is attached to the projector 100, the lens interchange detector 152 acquires lens information from the newly attached projection lens. The newly acquired lens information is compared with the lens information of the projection lens 160 stored in the lens information storage unit 151, and if they coincide with each other, an attachment of a projection lens 160' different from the projection lens 160 (the lens interchange) is detected and the lens shift controller 153 may be notified of it.

In the following description, assume that the lens unit 163, the lens microcomputer 161, and the lens memory 162 are also provided to the newly attached projection lens 160'. Further, assume that the lens information 162A and effective range information 162B of the projection lens 160' are stored in the lens memory 162.

The panel size storage unit 155 includes a nonvolatile memory, such as an EEPROM, and stores the size of the light modulation panel 134. The size of the light modulation panel 134, as used herein, may be at least one of a diagonal length and an aspect ratio, a long side length, a short side length, an area and a length of one side, and the like. In addition, the size may be the size of an effective modulation area where the illumination light is actually modulated in the light modulation panel 134 or an area set inward by a margin.

The determination unit 154 reads the size of the light modulation panel 134 from the panel size storage unit 155 and acquires the lens shift position detected by the shift position detector 143. The determination unit 154 acquires effective range information 162B from the lens memory 162 through a communication with the lens microcomputer 161.

The effective range information 162B is unique information for each projection lens, and indicates an effective range (referred to as an effective lens range hereinafter) in the lens unit 163 of the projection lens. The effective lens range is a range on a plane (referred to as a lens incident plane hereinafter) orthogonal to the optical axis of the lens unit 163 at the lens position closest to the light modulation panel in the lens unit 163. The effective range of the lens is a range in which a good non-chipped projection image (smaller than a predetermined amount) is displayed on the projection surface when all image light from the light modulation panel 134 is incident on it.

The determination unit 154 calculates a range in which the image light from the light modulation panel 134 passes on the above lens incident plane (referred to as an image light passing range hereinafter). Then, the determination unit 154 compares the calculated image light passing range with the effective lens range indicated by the effective range information 162B. If the image light passing range is located within the effective lens range, all image light from the light modulation panel 134 passes through the lens unit 163, reaches the projection surface, and provides a good display of the projection image. On the other hand, if at least part of the image light passing range sticks into the effective lens range, at least part of the image light from the light modulation panel 134 does not reach the target surface because it does not enter the lens unit 163 or is shielded by the barrel (or a light shielding member) that holds an optical element such as a mirror or the like in the lens unit 163. As a result, the projection image displayed on the projection surface has a chip exceeding a predetermined amount.

When the lens unit 163 includes a resin lens and the barrel temperature rises because the barrel shields the image light, the barrel and the optical element may be thermally deformed. Thus, from the viewpoint of protecting the projection lens 160 as well as the chip of the projection image, it is necessary to set the effective lens range so as to prevent the image light from being shielded.

In this embodiment, the controller 150 controls (permits) a shift of the projection lens 160 relative to (the image light from) the light modulation panel 134 within a shift permissible range that is a range of a lens shift position where the entire image light passing range falls within the effective lens range. In other words, controlling the shift of the projection lens 160 within the shift permissible range is equivalent with controlling the position of the effective lens range so as to include the entire image light passing range. The effective range information 162B is information used to position the projection lens 160 within the shift permissible range.

If the determination unit 154 determines that at least part of the image light passing range is located outside the effective lens range (or the lens shift position is located outside the shift permissible range), the determination unit 154 notifies the lens shift controller 153 of this result. The relationship between the image light passing range and the effective lens range and the determination method by the determination unit 154 will be described in detail later.

The effective lens range is not limited to the range in which the projection image is hardly chipped (the image light is hardly shielded) as described above, but may be a range in which an amount of the distortion, the chromatic aberration, the peripheral luminance reduction, or the like in the projection image is smaller than a predetermined amount. The effective lens range may be a range in which a predetermined brightness is obtained in at least specific part (such as central part) of the projection image. The effective lens range may be a range where a predetermined brightness can be obtained in the darkest part of the projection image. Thus, the effective lens range is determined according to a condition relating to the image quality such as chipping, distortion, chromatic aberration, and brightness of the projection image. The effective lens range may be a range according to the characteristics of the projector 100 such as a light emission amount of the light source unit 120 and a drive limit range of the lens shift mechanism 140.

The lens shift controller 153 controls the shift driving unit 142 to shift the mount 141. The lens shift controller 153 controls the shift driver 142 so that the image light passing range is located within the effective lens range or the projection lens enters the shift permissible range when the lens interchange detector 152 detects the lens interchange and the determination unit 154 determines the outside of the effective range. Details of this control will be described later.

The range in which the image light can pass the lens unit 163 without being shielded is similar to the image circle of the lens unit 163, and the shape is also similar to the shape of the image circle. In this embodiment, the effective lens range is the image circle of the lens unit 163, and the lens shift position is adjusted so that the image light can pass the image circle. The image circle of the lens unit 163 is determined by the diameter of the lens closest to the light modulation panel in the lens unit 163 or the aperture diameter in the lens unit 163.

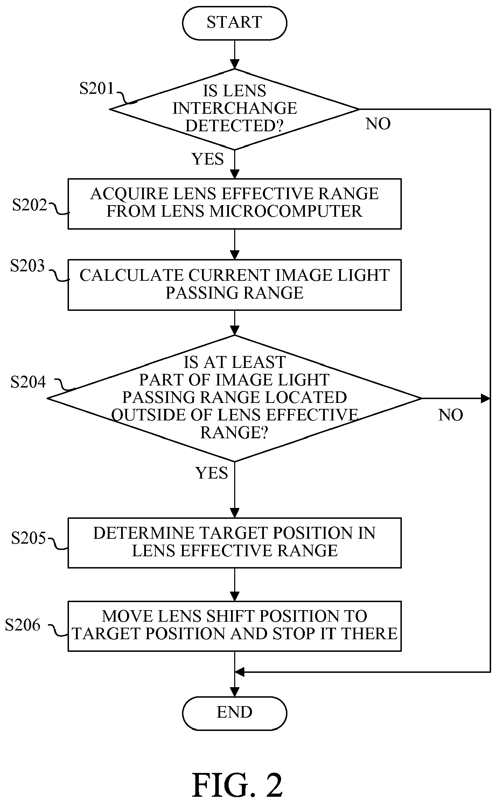

A flowchart in FIG. 2 illustrates processing performed by the controller 150 during the lens interchange. The controller 150 executes this processing according to a computer program before the projector 100 starts the image projection in response to a user operation on the operation unit 101.

In the step S201, the controller 150 determines whether lens interchange has been detected by the lens interchange detector 152. If the lens interchange is detected, the controller 150 proceeds to the step S202, and if it is not detected, the flow ends.

In the step S202, the controller 150 acquires effective range information 162B of the projection lens 160' attached after the lens interchange by the communication with the lens microcomputer 161. The controller 150 causes the lens information storage unit 151 to store the lens information 162A and the effective range information 162B of the projection lens 160'.

In the step S203, the controller 150 (determination unit 154) calculates the image light passing range using the size of the light modulation panel 134 read from the panel size storage unit 155 and the lens shift position detected by the shift position detector 143.

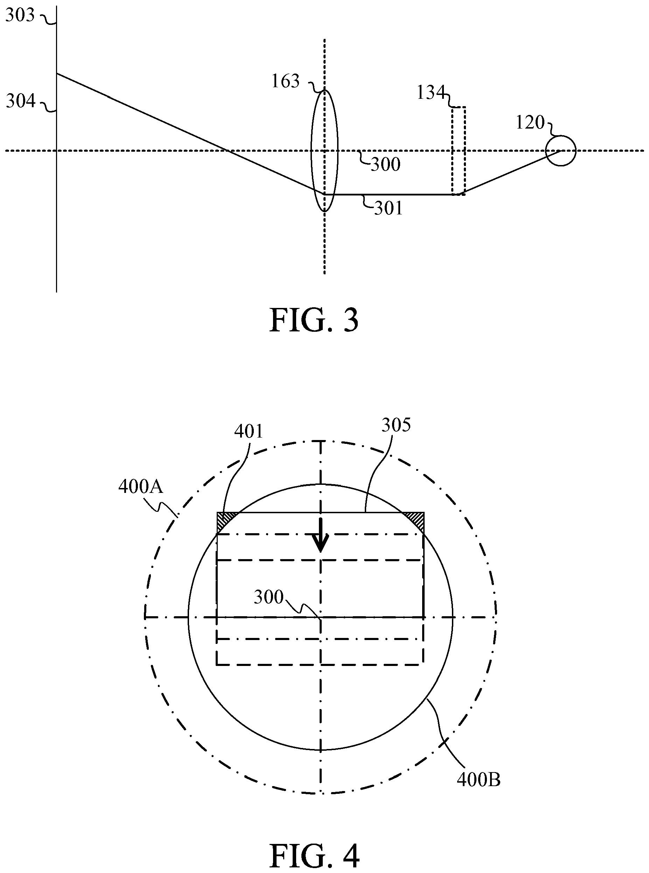

FIG. 3 illustrates an optical path from the light source unit 120 to a projection surface 303 in this embodiment. The illumination light emitted from the light source unit 120 is modulated by the light modulation panel 134, becomes image light 301, passes through the lens unit 163, and forms a projection image 304 on the projection surface 303. Although the lens unit 163 actually includes a plurality of lenses, FIG. 3 illustrates a single lens. The lens unit 163 has an image circle as an effective lens range in which the incident image light 301 can pass through the inside of the lens unit 163 with almost no chipping, peripheral brightness reduction, distortion, and chromatic aberration of the projection image more than the permissible level.

FIG. 4 illustrates image circles 400A and 400B of the lens unit 163 of two different types of projection lenses on the lens incident plane. The image circle 400A is an image circle of the projection lens attached on the projector 100 before the lens is interchanged, and the image circle 400B is an image circle of the newly attached interchanged projection lens. Both of these image circles 400A and 400B are circular ranges centering on the optical axis 300 of the lens unit 163. A rectangular solid line frame indicates an image light passing range 305 through which the image light 301 illustrated in FIG. 3 passes on the lens incident plane.

Since the entire image light passing range 305 is located inside the image circle 400A before the lens interchange, the image light from the light modulation panel 134 passes through the lens unit 163 and reaches the projection surface without being shielded. On the other hand, part 401 of the image light passing range 305 sticks into the image circle 400B after the lens interchange, and thus part of the image light is shielded and does not reach the projection surface. The controller 150 controls the lens shift mechanism 140 (lens shift position) so that the entire image light passing range 305 is positioned inside the image circle 400B as indicated by an alternate long and short dash line frame. At this time, the controller 150 controls the lens shift mechanism 140 so as to shift the projection lens to a second position and stop it there that can be reached by a shift amount smaller than a shift amount to the first position (home or reset position) that is the reference position relative to the light modulation panel 134.

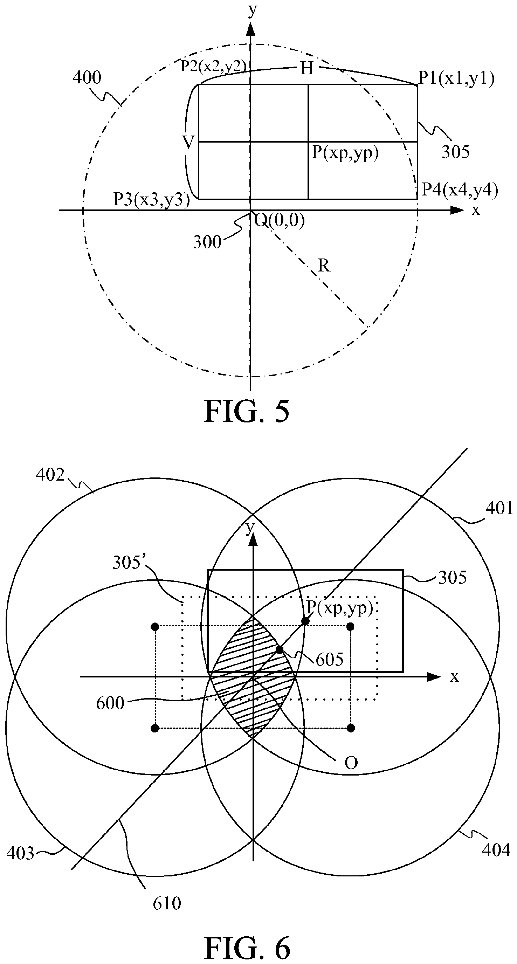

Referring now to FIG. 5, a description will be given of a calculating method of an image light passing range 305. FIG. 5 sets the position of the optical axis 300 on the lens incident plane to an origin O(0, 0), the vertical direction to the y-axis direction, and the horizontal direction to the x-axis direction. The shift position detector 143 detects the center position $P(x_p, y_p)$ of the image light passing range 305. Assume H is a width of the image light passing range 305 calculated by the controller 150 from the size of the light modulation element 134 acquired from the panel size storage unit 155, and V is a height. Four vertices of the rectangular image light passing range 305 are defined as $P_n$ (n = 1, 2, 3, 4) counterclockwise from the upper right vertex. In the step S203, the determination unit 154 calculates the coordinates of the vertex $P_n$ by the following expression (1) using the center position $P(x_p, y_p)$, the width H, and the height V of the image light passing range 305.

$$P_1\left(x_p + \frac{H}{2}, y_p + \frac{V}{2}\right)$$

$$P_2\left(x_p - \frac{H}{2}, y_p + \frac{V}{2}\right)$$

$$P_3\left(x_p - \frac{H}{2}, y_p - \frac{V}{2}\right)$$

$$P_4\left(x_p + \frac{H}{2}, y_p - \frac{V}{2}\right) \qquad (1)$$

Next, in the step S204, the determination unit 154 determines whether or not at least part of the image light passing range 305 is located outside the image circle 400 that is the effective lens range. The image circle 400 illustrated in FIG. 5 is a circle having a radius R with the origin O as the center. The determination unit 154 can determine whether or not the vertex $P_n$ obtained in the step S203 is located outside the image circle 400, by determining whether or not the following expression (2) is satisfied.

$$R - \sqrt{x_n^2 + y_n^2} < 0 \quad (n = 1,2,3,4,) \qquad (2)$$

When the condition of the expression (2) is satisfied in any of n = 1, 2, 3, and 4, or when at least part of the image light passing range 305 protrudes to the outside of the image circle 400, the controller 150 proceeds to the step S205. If not (or when the entire image light passing range 305 is located in the image circle 400), the controller 140 ends this processing.

In the step S205, the controller 150 determines a destination of the image circle 400 relative to the image light passing range 305. More specifically, the controller 150 calculates the lens shift position that position the entire image light passing range 305 in the image circle 400 by the shortest shift amount based on the current lens shift position, the origin O and the radius R of the image circle 400, and sets the position to the target lens shift position as the second position. This configuration can position the entire image light passing range 305 in the effective lens range more quickly than the interchanged projection lens shifted to the above home position, and can shorten a time from the lens interchange to a good display of a projection image.

FIG. 6 illustrates a method for calculating a target lens shift position. In reality, the projection lens shifts and the image circle moves relative to the image light passing range 305, but the following description assumes that the image light passing range 305 moves relative to the image circle.

First, the controller 150 finds a target range 600 in which the center position $P(x_p, y_p)$ of the image light passing range 305 can be located so that the image light passing range 305 does not protrude from the image circle. Assume that the four vertices of the image light passing range 305 when the center position $P(x_p, y_p)$ of the image light passing range 305 coincides with the optical axis 300 of the lens unit 163 are $P_n$ (n = 1, 2, 3, 4) counterclockwise. In addition, assume that the coordinate of each point in FIG. 6 is defined as Pn'(xn', yn'). A circle having a radius R centered on the point P1' is defined as a circle 401. Similarly, circles having a radius R centered on the points P2', P3', and P4' are respectively defined as a circle 402, a circle 403, and a circle 404.

In FIG. 6, an area where the inner areas of the circles 401 to 404 overlap each other is indicated by hatching, and this area is the target range 600 described above. A coordinate $(x_n', y_n')$ of the point Pn' is expressed by the following expression (3), and the boundary of the target range 600 is expressed by the following expression (4).

$$P'_1 \left( +\frac{H}{2}, +\frac{V}{2} \right)$$

$$P'_2 \left( -\frac{H}{2}, +\frac{V}{2} \right)$$

$$P'_3 \left( -\frac{H}{2}, -\frac{V}{2} \right)$$

$$P'_4 \left( +\frac{H}{2}, -\frac{V}{2} \right) \tag{3}$$

$$\begin{cases} (x-\frac{H}{2})^2 + (y-\frac{V}{2})^2 = R^2 & \{x, y \mid x<0, y<0\} \\ (x+\frac{H}{2})^2 + (y-\frac{V}{2})^2 = R^2 & \{x, y \mid x \geq 0, y<0\} \\ (x+\frac{H}{2})^2 + (y+\frac{V}{2})^2 = R^2 & \{x, y \mid x \geq 0, y \geq 0\} \\ (x-\frac{H}{2})^2 + (y+\frac{V}{2})^2 = R^2 & \{x, y \mid x<0, y \geq 0\} \end{cases} \tag{4}$$

Next, the controller 150 finds a target position where the center position $P(x_p, y_p)$ of the image light passing range 305 can be located by the shortest shift amount of the projection lens within the target range 600. A straight line 610 connecting the center position $P(x_p, y_p)$ of the image light passing range 305 to the origin O where the optical axis 300 of the lens unit 163 is located is expressed by the following expression (5).

$$y = \frac{y_p}{x_p} x \tag{5}$$

The point closest to the center position $P(x_p, y_p)$ of the image light passing range 305 is the target position 605 among intersections between the straight line 610 and the boundary of the target range 600. A description will now be given of a method of calculating the target position 605 when the projection lens is shifted to a first quadrant where $x_p \geq 0$ and $y_p \geq 0$ relative to the origin O. Even when the projection lens is shifted to the second to fourth quadrants, the target position can be similarly calculated using the center position $P(x_p, y_p)$ of the image light passing range 305, the size of the light modulation panel 134, and the expressions (3) to (5). A coordinate $(x_s, y_s)$ of the target position 605 when the projection lens is shifted to the first quadrant is expressed by the following expression (6).

$$x_s = \frac{-b + \sqrt{b^2 - 4ac}}{2a}$$

$$y_s = \frac{y_p}{x_p} x_s$$

$$a = 1 + \frac{y_p^2}{x_p^2}$$

$$b = V \frac{y_p}{x_p} + H$$

$$c = \frac{H^2}{4} + \frac{V^2}{4} - R^2 \qquad (6)$$

The controller 150 that has calculated the target position 605 notifies the lens shift controller 153 of the target position 605. In FIG. 6, an image light passing range 305' having the target position 605 as the center position is indicated by a dotted line. When the processing in the step S205 is completed, the controller 150 proceeds to the step S206.

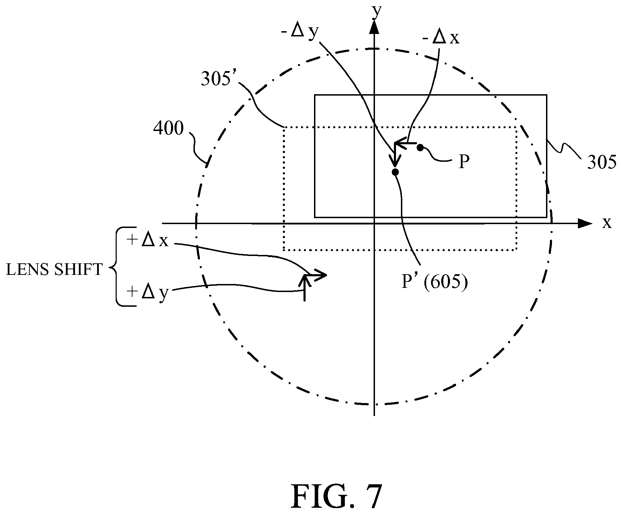

In the step S206, the lens shift controller 153 calculates a target lens shift position for positioning the center position P' of the image light passing range 305' at the target position 605, as illustrated in FIG. 7. More specifically, the lens shift controller 153 calculates -Δx and -Δy indicating the direction and distance from the center position P of the image light passing range 305 to the center position P' of the image light passing range 305', adds +Δx and +Δy having reversed signs to the current lens shift position detected in the step S203, and calculates the target lens shift position. Then, the lens shift controller 153 controls the shift driver 142 to shift the projection lens to the target lens shift position. Thereby, the entire image light passing range 305' can be located in the image circle 400 by the shortest shift amount of the projection lens.

This embodiment can shorten the time from the lens interchange to a good display of a projection image.

SECOND EMBODIMENT

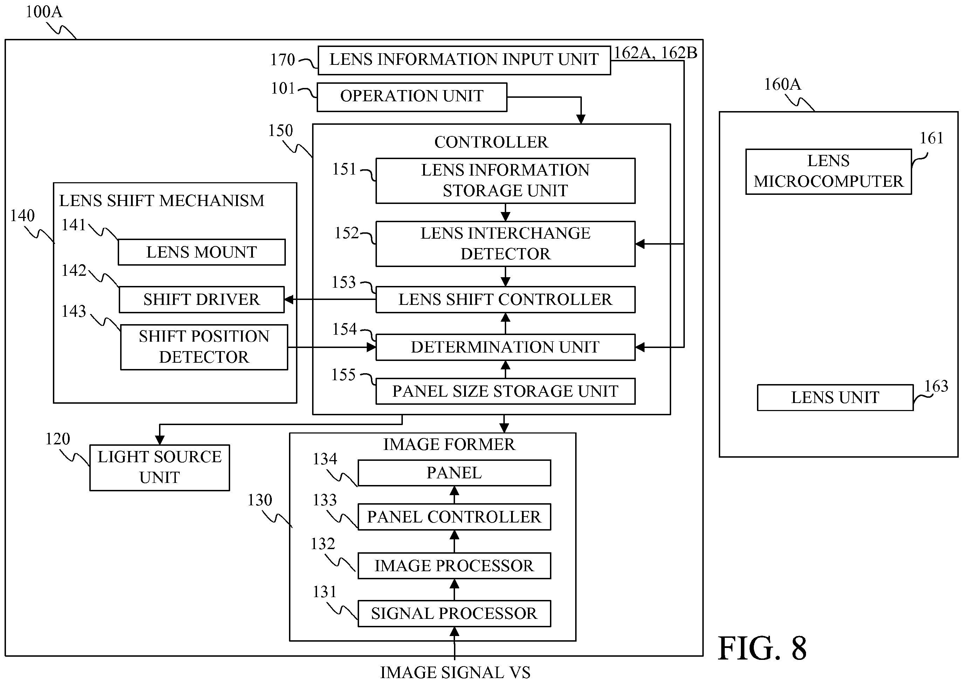

FIG. 8 illustrates a configuration of a projector 100A according to a second embodiment of the present invention. Those elements in the projector 100A in this embodiment, which are corresponding elements in the projector 100 of the first embodiment, will be designated by the same reference numerals, and a description thereof will be omitted.

The projector 100A according to this embodiment includes a lens information input unit 170 as a storage unit. The lens information input unit 170 stores the lens information 162A and effective range information 162B of a plurality of types of projection lenses attachable to the projector 100A. The lens information input unit 170 has a function that allows the user to input a projection lens to be attached to the projector 100A among the plurality of types of projection lenses by a user's button operation, touch panel operation, and remote control operation. At this time, an input image of the projection lens may be displayed by a monitor provided in the projector 100A or an OSD projected by the projector.

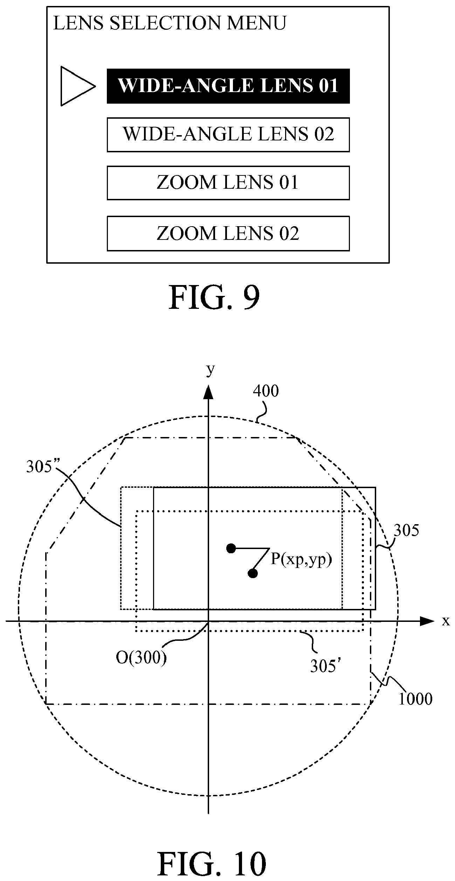

FIG. 9 illustrates an input screen (lens selection menu) of a projection lens. The lens selection menu displays "wide-angle lens 1," "wide-angle lens 2," "zoom lens 1," and "zoom lens 2" as a plurality of types of projection lenses. FIG. 9 illustrates that the user inputs the "wide-angle lens 01."

In this embodiment, the lens memory 162 storing the lens information 162A and the effective range information 162B is not provided to the projection lens 160A unlike the first embodiment, and the controller 150 and the lens microcomputer 161 do not communicate with each other.

The lens information storage unit 151 stores the lens information 162A of the projection lens that is attached before the lens interchange. When the user inputs a projection lens ("wide-angle lens 1" in FIG. 9) attached after the lens interchange, the lens information input unit 170 notifies the lens interchange detector 152 of the lens information 162A of the projection lens, and notifies the determination unit 154 of the effective range information 162B. The lens interchange detector 152 compares the lens information 162A stored in the lens information storage unit 151 with the lens information 162A notified from the lens information input unit 170, and determines the lens interchange, by determining whether or not they coincide with each other.

The input of the projection lens used after the lens interchange by the user may be after the lens interchange as described above or before the lens interchange. In inputting the projection lens to be used after the lens exchange, before the lens interchange, the user notifies the controller 150 through the operation unit 101 of the lens interchange. Upon receiving this notice, the controller 150 reads out the lens information 162A of the currently attached projection lens from the lens information storage unit 151 and notifies the lens interchange detector 152 of the result. When the user inputs the projection lens to be used after the lens interchange through the lens information input unit 170, the lens information input unit 170 notifies the lens interchange detector 152 of the lens information 162A of the projection lens to be used after the lens interchange. The lens interchange detector 152 compares the lens information 162A of the currently installed projection lens with the lens information 162A of the projection lens used after the lens interchange, and determines that it will be interchanged with a different type of projection lens from the currently attached projection lens, if they do not coincide with each other. In this case, the lens information input unit 170 notifies the determination unit 154 of the effective range information 162B of the projection coefficient distribution lens used after the lens interchange.

Further, an interlock switch for detecting the attachment and detachment of the projection lens 160 is provided to the lens mount 141 of the projector 100, and when the interchange of the projection lens is detected by the interlock switch, a lens selection menu of the projection lens may be displayed.

The control of the lens shift mechanism 140 when the determination unit 154 determines that it is out of the effective range is the same as that of the first embodiment.

VARIATION

The first embodiment has discussed the effective lens range that is the image circle of the lens unit 163. However, the effective lens range may be a range set inside the image circle.

FIG. 10 illustrates a range 1000 in which the brightness of the projection image is equal to or higher than a predetermined brightness inside the image circle 400 on the lens incident plane orthogonal to the optical axis 300. In this embodiment, this range 100 is the effective lens range.

Part of the image light passing range 305 sticks into the effective lens range 100 and outside the image circle 400.

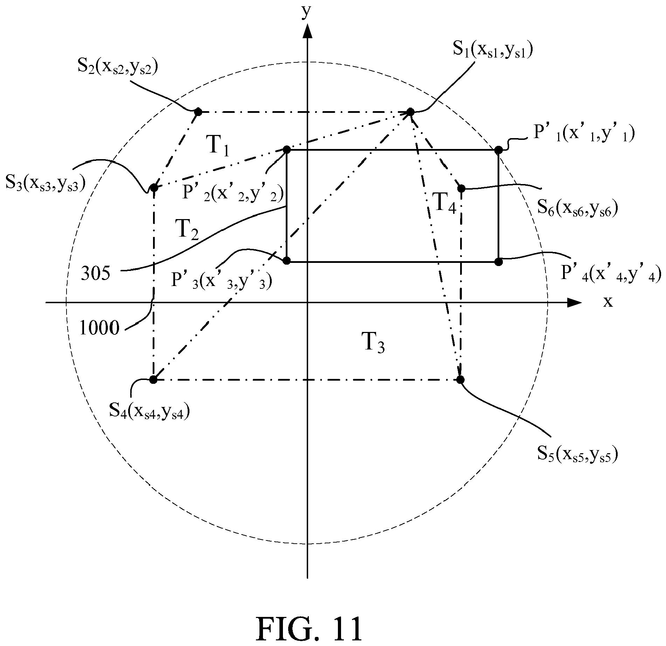

FIG. 11 illustrates how the controller 150 (determination unit 154) determines whether or not the image light passing range 305 protrudes outside the effective lens range 1000. Assume that $S_n(x_{sn}, y_{sn})$ [n = 1, 2, 3, 4, 5, 6] is a vertex of a polygon indicating the effective lens range 1000. These vertices are arranged counterclockwise from the upper right vertex. Assume that $T_m$ [m = 1, 2, 3, 4] is each triangle when it is divided into a triangle by all diagonal lines extending from $S_1$.

The vertex of the triangle $T_m$ is defined as $t_{mN}(x_{tmN}, y_{tmN})$ [N = 1, 2, 3]. These vertices are arranged counter-clockwise starting from $S_1$. The image light passing range 305 is defined as $P'_M(x'_M, y'_M)$ [M = 1, 2, 3, 4] counterclockwise from the upper right vertex. A vector formed by the vertex $t_{mN}$ of $T_m$ and one point $P'_M$ of the vertex of the image light passing range 305 is expressed by the following expression (7).

$$\overrightarrow{t_{mN}P'_M} = (x'_M - x_{tmN}, y'_M - y_{tmN})\ldots(7)$$

A vector formed by one point $t_{ma}$ adjacent counterclockwise to $t_{mN}$ (where a is a=N+1 when N = 1, 2 and a=1 when N = 3) is expressed by the following expression (8).

$$\overrightarrow{t_{ma}t_{mN}} = (x_{mN} - x_{ma}, y_{mN} - x_{ma})\ldots(8)$$

The z component of the outer product of $\overrightarrow{t_{mN}P'_M}$ and $\overrightarrow{t_{ma}t_{mN}}$ is expressed by the following expression (9).

$$\left(\overrightarrow{t_{mN}P'_M} \times \overrightarrow{t_{ma}t_{mN}}\right)_z$$
$$= (x'_M - x_{tmN}) \cdot (y_{tmN} - x_{tma}) - (y'_M - y_{tmN}) \cdot (x_{tmN} - x_{tma})$$
$$\ldots(9)$$

At this time, whether or not the vertex $P'_M$ of the image light passing range 305 protrudes outside the triangle $T_m$ may be determined by determining whether the following expression (10) is established with at least one N.

$$\left( \overrightarrow{t_{mN}P'_M} \times \overrightarrow{t_{ma}t_{mN}} \right)_z < 0 \qquad (10)$$

By determining that at least one vertex $P'_M$ of the image light passing range 305 is located out of all the triangles $T_m$ using the expression (10), at least part of the image light passing range 305 can be determined to be located outside of the effective lens range 1000. For example, since $P'_1$ satisfies the expression (10) with at least one N for all triangles $T_m$, it can be determined that at least part of the image light passing range 305 is located outside the effective lens range 1000.

The first embodiment has discussed the controller 150 calculating the target lens shift position movable by the shortest shift amount. However, when the shift speed is different between the horizontal shift and the vertical shift in the lens shift mechanism 140, or when it takes a time to calculate the target lens shift position due to the processing capability of the controller 150, or the like, the shortest shift amount cannot provide a target lens shift position in the shortest time, such as in a case where the shift speed in the vertical shift of the lens shift mechanism 140 is lower than the shift speed in the horizontal shift. In this case, the controller 150 calculates the shortest vertical shift amount (= 0) in the effective lens range 100 or the target lens shift position that can be reached only by the horizontal shift.

FIG. 10 illustrates an image light passing range 305' corresponding to the target lens shift position that can be reached by the shortest shift amount, and an image light passing range 305" corresponding to the target lens shift position that can be reached only by the horizontal shift.

By shifting the projection lens to the target lens shift position that can be reached only by the horizontal shift, the projection lens can be shifted to the target lens shift position in the shortest time even if the shift amount is not the shortest. As a result, it is possible to make shorter the time from the lens interchange to the good display of the projection image.

Each of the above embodiments can start a good image projection in a short time when the projection lens unit is interchanged.

OTHER EMBODIMENTS

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Claims

1. An image projection apparatus (100) to which a projection lens unit (160) configured to project image light onto a projection surface is detachably attached, the image projection apparatus comprising:

a light modulation unit (134) configured to modulate incident light and to generate the image light;
a shifter (140) configured to shift one unit of the projection lens unit and the light modulation unit relative to the other unit; and
a controller (150) configured to control the shifter so as to shift the one unit within a shift permissible range relative to the other unit,

**characterized in that** when the projection lens unit is attached to the image projection apparatus and the one unit is located outside the shift permissible range relative to the other unit, the controller controls the shifter so as to shift, within the shift permissible range, the one unit to a second position that can be reached by a shift amount shorter than a shift amount to a first position that is a reference position for the other unit, and to stop the one unit there.

2. The image projection apparatus according to claim 1, **characterized in that** the controller controls the shifter so as to minimize a shift amount to the second position.

3. The image projection apparatus according to claim 1, **characterized in that** the controller controls the shifter so as to minimize a time required to shift the one unit to the second position.

4. The image projection apparatus according to any one of claims 1 to 3, **characterized in that** the shift permissible range is a range in which the image light never goes outside an effective range of the projection lens unit.

5. The image projection apparatus according to any one of claims 1 to 3, **characterized in that** the shift permissible range is a range in which a chip amount of a projection image formed by the image light on the projection surface is smaller than a predetermined amount.

6. The image projection apparatus according to any one of claims 1 to 3, **characterized in that** the shift permissible range is a range in which a whole or a specific part of the projection image formed by the image light on the projection surface becomes brighter than a predetermined brightness.

7. The image projection apparatus according to any one of claims 1 to 3, **characterized in that** the shift permissible range is a range in which a darkest part in the projection image formed by the image light on the projection surface is brighter than a predetermined brightness.

8. The image projection apparatus according to any one of claims 1 to 3, **characterized in that** the shift permissible range is a range in which a chromatic aberration of the image light reaching the projection surface is less than a predetermined amount.

9. The image projection apparatus according to any one of claims 1 to 3, **characterized in that** the shift permissible range is a range in which a distortion of the projection image formed by the image light on the projection surface is less than a predetermined amount.

10. The image projection apparatus according to any one of claims 1 to 3, **characterized in that** the shift permissible range is a range that provides a shift amount by which an image light passing range falls within the shift permissible range.

11. The image projection apparatus according to any one of claims 1 to 3, **characterized in that** the controller starts projecting the image light after shifting the one unit to the second position and stopping the one unit there.

12. The image projection apparatus according to any one of claims 1 to 11, **characterized in that** the controller acquires information used to position the one unit within the shift permissible range by a communication from the projection lens unit including a memory (162) configured to store the information.

13. The image projection apparatus according to any one of claims 1 to 11, further comprising a memory (162) configured to store information used to position the one unit within the shift permissible range for each of a plurality of projection lens units, **characterized in that** the controller acquires the information for one of the plurality of projection lens units to be attached to the image projection apparatus from the memory.

14. A control method of an image projection apparatus configured to allow a projection lens unit to be interchanged which projects image light onto a projection surface, and including a light modulation unit configured to modulate incident light and to generate the image light, and a shifter configured to shift one unit of the projection lens unit and the light modulation unit relative to the other unit, the control method comprising:

controlling the shifter so as to shift the one unit within a shift permissible range relative to the other unit; and

controlling, when the projection lens unit is attached to the image projection apparatus and the one unit is located outside the shift permissible range relative to the other unit, the shifter so as to shift, within the shift permissible range, the one unit to a second position that can be reached by a shift amount shorter than a shift amount to a first position that is a reference position for the other unit, and to stop the one unit there.

15. A computer program that causes a computer of an image projection apparatus including a light modulation unit configured to modulate incident light and to generate the image light, and a shifter configured to shift one unit of the projection lens unit and the light modulation unit relative to the other unit, to execute the control method according to claim 14.

FIG. 1

IMAGE SIGNAL VS

START

S201 — IS LENS INTERCHANGE DETECTED?

NO

YES

S202 — ACQUIRE LENS EFFECTIVE RANGE FROM LENS MICROCOMPUTER

S203 — CALCULATE CURRENT IMAGE LIGHT PASSING RANGE

S204 — IS AT LEAST PART OF IMAGE LIGHT PASSING RANGE LOCATED OUTSIDE OF LENS EFFECTIVE RANGE?

NO

YES

S205 — DETERMINE TARGET POSITION IN LENS EFFECTIVE RANGE

S206 — MOVE LENS SHIFT POSITION TO TARGET POSITION AND STOP IT THERE

END

FIG. 2

303

304

163

134

120

300

301

FIG. 3

401

305

400A

300

400B

FIG. 4

FIG. 5

FIG. 6

**FIG. 7**

FIG. 8

EP 3 657 250 A1

LENS SELECTION MENU

▷ **WIDE-ANGLE LENS 01**

WIDE-ANGLE LENS 02

ZOOM LENS 01

ZOOM LENS 02

# FIG. 9

# FIG. 10

FIG. 11

Europäisches
Patentamt

European
Patent Office

Office européen
des brevets

## EUROPEAN SEARCH REPORT

Application Number

EP 19 20 6867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 177846 A (CANON KK) 13 September 2012 (2012-09-13) * paragraphs [0037], [0039] * ----- | 1-15 | INV. G03B21/14 G03B5/00 |
| X | US 2018/033123 A1 (NARIMATSU SHUJI [JP] ET AL) 1 February 2018 (2018-02-01) * paragraph [0126] * ----- | 1-15 | |
| A | US 2005/024596 A1 (KURODA AKITOSHI [JP] ET AL) 3 February 2005 (2005-02-03) * abstract * ----- | 1-15 | |

TECHNICAL FIELDS
SEARCHED      (IPC)

G03B

The present search report has been drawn up for all claims

| Place of search | Date of completion of the search | Examiner |
|---|---|---|
| Munich | 9 April 2020 | Pavón Mayo, Manuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 6867

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2020

| Patent document cited in search report | | Publication date | Patent family member(s) | | Publication date |
|---|---|---|---|---|---|
| JP 2012177846 | A | 13-09-2012 | JP 5744566 B2 | | 08-07-2015 |
| | | | JP 2012177846 A | | 13-09-2012 |
| US 2018033123 | A1 | 01-02-2018 | JP 2018021943 A | | 08-02-2018 |
| | | | US 2018033123 A1 | | 01-02-2018 |
| US 2005024596 | A1 | 03-02-2005 | CN 1577056 A | | 09-02-2005 |
| | | | US 2005024596 A1 | | 03-02-2005 |
| | | | US 2006244933 A1 | | 02-11-2006 |

EPO FORM P0459

For more details about this annex : see Official Journal of the European Patent Office, No. 12/82

**EP 3 657 250 A1**

## REFERENCES CITED IN THE DESCRIPTION

### Patent documents cited in the description

- JP 5911285 B
- JP 5744566 B